# EUROPEAN PATENT SPECIFICATION

(11) **EP 4 452 704 B1**
(45) Date of publication and mention of the grant of the patent: **08.07.2026**
(21) Application number: 22835493.2
(22) Date of filing: 21.12.2022
(51) Int. Cl.: F16D 65/097, H05B 6/10

(54) **BRAKING SYSTEM WITH REDUCED TENDENCY TO SQUEAL IN COLD CONDITIONS, IN PARTICULAR FOR ELECTRIC VEHICLES, AND ASSOCIATED BRAKE PAD AND METHOD**
BREMSSYSTEM MIT VERRINGERTER NEIGUNG ZUM QUETSCHEN BEI KALTEN BEDINGUNGEN, INSBESONDERE FÜR ELEKTROFAHRZEUGE, UND ZUGEHÖRIGER BREMSBELAG UND VERFAHREN
SYSTÈME DE FREINAGE À TENDANCE RÉDUITE AU CRISSEMENT DANS DES CONDITIONS DE FROID, EN PARTICULIER POUR DES VÉHICULES ÉLECTRIQUES, ET PLAQUETTE DE FREIN ET PROCÉDÉ ASSOCIÉS

(30) Priority: 24.12.2021 IT 202100032645
(43) Date of publication of application: 30.10.2024
(73) Proprietor: ITT Italia S.r.l., 20045 Lainate (MI) (IT)
(72) Inventor: COGNO, Simone, 12032 BARGE (CN) (IT); DELLA ROVERE, Andrea, 12032 BARGE (CN) (IT); DONZELLI, Daniele, 12032 BARGE (CN) (IT); GEDDA, Filippo, 12032 BARGE (CN) (IT); CANOVA, Aldo, 12032 BARGE (CN) (IT); FRESCHI, Fabio, 12032 BARGE (CN) (IT); BARALE, Stefano, 12032 BARGE (CN) (IT)
(74) Representative: Studio Torta S.p.A.
(86) International application number: PCT/IB2022/062584
(87) International publication number: WO 2023/119174

(56) References cited:
- EP-A1- 2 927 530
- CN-A- 110 219 915
- FR-A1- 2 919 368
- JP-A- H0 727 154
- JP-A- S5 947 536
- US-A- 4 667 781
- US-A1- 2004 003 973
- US-A1- 2005 045 435
- US-B2- 9 321 605

## Description

### Technical Field

The present invention relates to a braking system for vehicles and to an associated brake pad configured in order to reduce or even to eliminate the tendency of such brake pad to squeal during braking at relatively low temperatures. The braking system of the invention may include such a brake pad, a brake caliper and associated accessories, or a brake shoe with associated brake drum.

The present invention moreover relates to a complete brake element, in particular a brake pad, including all parts and accessories thereof (backplate, underlayer, friction material, shim, springs and all accessories necessary for its correct operation) configured to be used in such a braking system and to an associated method for reducing or even eliminating the tendency of a braking system to give raise to a squeal phenomenon during braking at relatively low temperatures.

### Prior Art

It is known that the brake pads under certain temperature and pressure conditions generate vibrations (1 Hz - 16,000 Hz) which people perceived as squeals. This phenomenon, in general, occurs with greater reproducibility at low temperatures of the brake pad (here and below "low" temperature means a temperature lower than 50°C); such low temperatures of the brake pad may occur immediately after starting a vehicle which has been parked for a long time, e.g. after the whole night, and/or when the environment temperature is close or below zero, like in winter.

In electric vehicles, due to regenerative braking system, the brake pads work at temperatures that are lower than the ones installed on a fuel-powered cars, so they are more subject to the squeal phenomenon. The absence of noise coming from a standard combustion engine, moreover, renders the cold brake squeal more perceptible.

In order to remove or to reduce cold noise, generally the pad manufacturer modify the formulation of the normally present underlayer (UL) to shift the glass transition point of the rubbers included in the UL. Below this temperature, the damping properties have a drastic drop. There are further countermeasures for this issue: modifying the friction material formulation, choosing different multilayer of materials for the anti-noise foil (shim) and optimizing the geometry of the pad in terms of chamfers and slot.

All the above solutions may however be complex to implement, costly and/or require optimization in order not to alter/reduce the braking performances of the brake pad or of the whole braking system. CN110219915 does not solve this problem.

US 2004/003973 A describes a brake shoe including a vibration-damping intermediate layer.

### Summary of the Invention

It is an object of the present invention to provide embodiments of a brake element, in particular a brake pad, and/or of an associated braking system of a vehicle aimed to reduce or even to avoid the noisiness produced in use by the squeal phenomenon.

It is in particular an object of the present invention to ensure a smooth and almost silent operation of a braking system, in particular forelectric or hybrid vehicles, especially in winter and anyway when the temperature of the brake elements, e.g. the brake pads, of the braking system are low, i.e. below 50°C.

It is moreover an object of the invention to provide an associated method for reducing or even eliminating the tendency of a braking system to give raise to squeal phenomena.

According to the present invention a braking system for vehicles and an associated braking element, preferably a brake pad, and further an associated method are therefore provided as defined in the appended claims.

In particular, the method of the invention is aimed to produce a forced increase in the underlayer (UL) temperature of the brake pad, which is independent of the natural increase of temperature that occur in operation due to the energy dispersed by friction during braking, so as to ensure that the underlayer always works at conditions that can assure the maximum damping behavior of the underlayer itself.

According to embodiments of the present invention, the underlayer is warmed up by providing, directly within the brake pad or in one of its components, a thermal power exploiting the principle of magnetic induction generated by an electromagnetic field.

The electromagnetic field may be generated by one or more electrically conducting coils that may be fed using electric power already present on the vehicle, e.g. produced by its engine or battery.

In a preferred embodiment, the electric coil/coils may be integrated in a brake pad structure, e.g. carried by the backplate, preferably in a shallow recess provided on the backplate rear face, facing on the side opposite to the element to be braked (e.g. a brake disc).

In different embodiments, the electric coil/coils may be carried out externally of the braking element, but close thereof, e.g. by the brake caliper.

### Brief Description of Drawings

Preferred but not limiting embodiments of the invention will be now described in more detail with reference to a number of practical working examples of implementation thereof which are solely intended to disclose in a non-exhaustive and not limiting manner the feature which are part of the content of the present disclosure, and with reference to the figures of the attached drawings, in which:
- Figure 1 shows a braking system according to the invention in its simplest configuration, including a braking element schematically shown in perspective view and designed to cooperate with an element to be braked, e.g. a brake disk;
- Figure 2 shows schematically in an enlarged scale the braking element of figure 1 in a partially exploded;
- Figures 3 and 4 are respective graphics showing the behavior in operation of the braking system of the invention;
- Figure 5 shows schematically in a further enlarged scale a perspective view of the braking element of figure 1 with parts partially removed to illustrate the internal structure thereof;
- Figure 6 shows schematically a different embodiment of the braking system according to the invention; and
- Figure 7 shows schematically two possible configurations of electric coils which are part of some embodiments of the braking system of the invention.

### Detailed Description

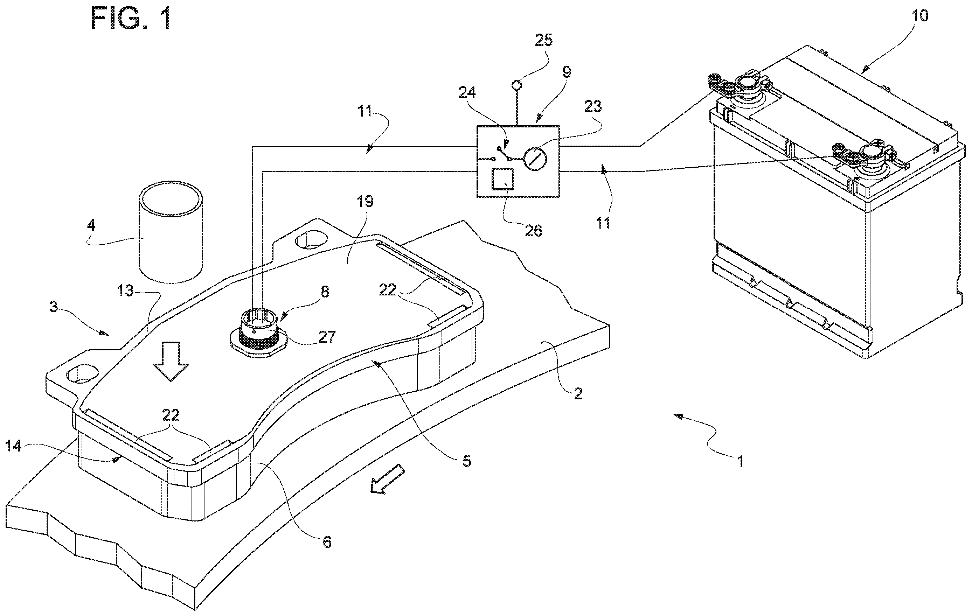

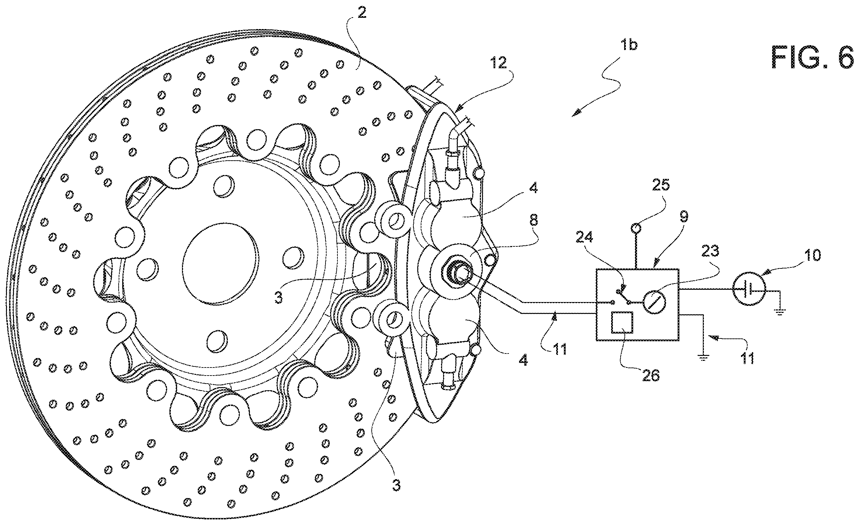

With reference to figures 1 and 6, the reference number 1 (and 1b in figure 6) indicates a braking system for a vehicle (known and not illustrated for sake of simplicity) comprising: an element to be braked 2, e.g. a brake disk or brake drum, configured to be in use angularly connected to a vehicle wheel hub (known and not illustrated for sake of simplicity); and at least a braking element 3, e.g. a brake pad or a brake shoe, configured to cooperate in use by friction with the element to be braked 2 under the action of at least an actuator 4 (only schematically shown in figure 1 and e.g. consisting in a brake piston which is part of a braking circuit of the vehicle) configured to push, when activated, the braking element 3 against the element to be braked in the direction of the arrow (figure 1).

Here, and herein below, reference will be made to a brake pad 3 and to a brake disk 2 without losing in generality.

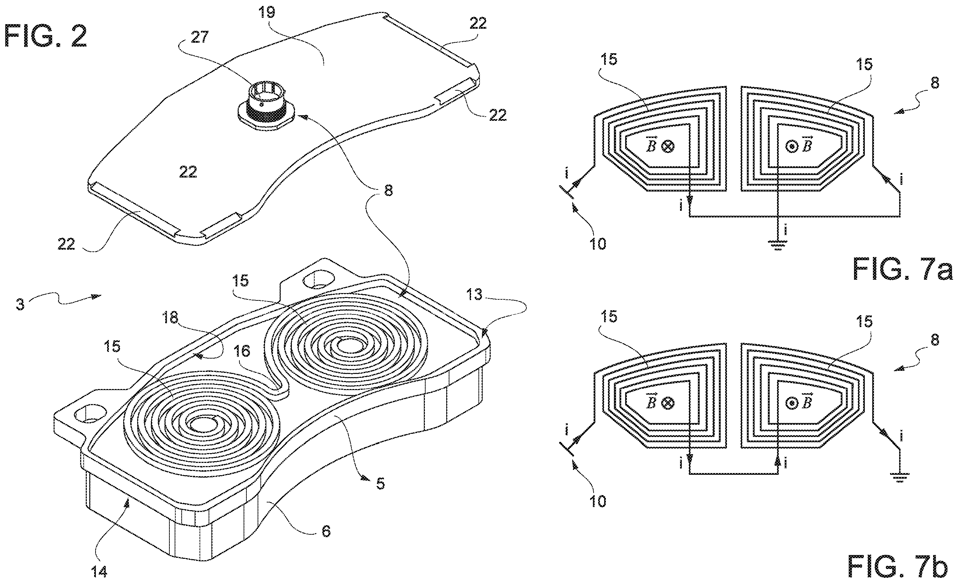

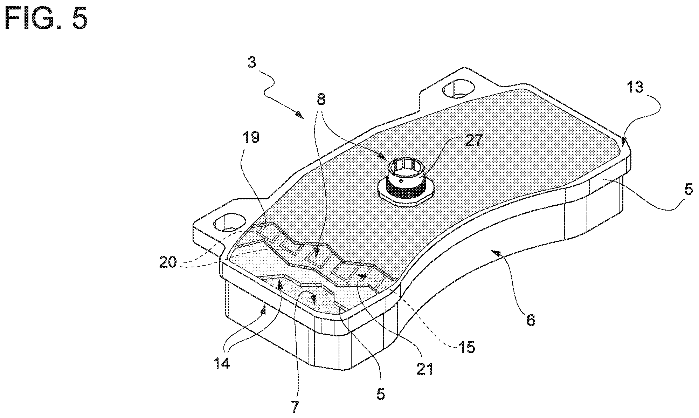

With reference also to figures 2 and 5, the braking element 3 comprises a metal support 5, in the case in point a backplate 5 of the brake pad 3, a block of friction material 6 carried by the support 5 and a damping layer 7 (visible only in figure 5, where the brake pad 3 is shown partially sectioned) in the case in point an underlayer or UL 7 of the brake pad 3. The damping layer / underlayer 7 is carried by the metal support 5 interposed between the support 5 itself and the friction material block 6, according to a known layout.

According to an aspect of the invention, the braking systems 1 and 1b further comprise an electric device 8 shown only schematically in figures 1 and 6, configured, as it will be seen, to warm up/heat the damping layer 7, a control unit 9 (shown only schematically as a block), configured to switch on and off the electric device 8, and a power source 10 for the electric device 8 and the control unit 9.

In the non-limitative embodiments shown the power source 10 operates in DC and consists of a vehicle battery connected to the control unit 9 and to the electric device 8 by means of an electric circuit 11 provided on-board the vehicle.

It is clear anyway that, according to possible embodiments not shown for sake of simplicity, the power source 10 could be provided directly on-board the brake pad 3 or on-board a brake caliper 12 (figure 6) carrying in known manner a pair of brake pads 3 arranged facing to each other and facing on opposite sides a brake disk 2 arranged therebetween and with the brake caliper 12 arranged astride the brake disk 2.

It is also clear that the control unit 9 may be carried on-board the vehicle or directly on-board each brake pad 3 or on-board the brake caliper 12.

Moreover, the power supply to the electric device 8 may be fed wireless from the power source 10, instead of using an electric circuit like electric circuit 11.

According to a further aspect of the invention, the electric device 8 consists of at least an electromagnetic inductor configured to generate a magnetic field when powered by the power source 10 in response to the control unit 9.

The at least one electromagnetic inductor 8 is to be arranged sufficiently close to the braking element 3 to concatenate the magnetic field generated by inductor 8 with the metal support 5, normally made in a ferromagnetic material, like iron or steel and/or any electroconductive/ferromagnetic component of the braking element. As non-limitative examples, the at least one inductor 8 may generate a magnetic field which concatenates not only or not even (e.g. if made of a light alloy) the support 5, but ferromagnetic powders contained in the friction material block 6 or in other well-known components of the brake pad 3, like the shim and/or the metallic springs of the brake pad 3 e.g. cooperating with the brake caliper 12.

In a first and preferred embodiment of the invention (figures 2 and 5) the at least one electromagnetic inductor 8 is carried by the support 5 on a first face 13 thereof, which is opposite to a second face 14 of the support 5 carrying the damping layer 7 and the friction material block 6 arranged above/onto the damping layer 7.

The electromagnetic inductor 8 comprises a pair of electric conductive and insulated coils 15 (figures 2, 5 and 7) which are electrically connected in series to each other and to the power source 10.

The electric connection between the pair of conductive coils 15 may be selected in the group consisting in: full series as shown in figure 7a, in order to establish two adjacent magnetic fluxes which are concordant; and anti-series as shown in figure 7b, in order to establish two adjacent magnetic fluxes which are discordant.

In a first embodiment (figure 2), the pair of electric coils 15 may be formed by an insulated electric wire 16 housed in a shallow recess 18 of the first face 13 of the support 5, which shallow recess 18 is closed by a cover 19, in order to protect and further insulate the electric wire 16.

In a second embodiment (figure 5) the pair of electric coils 15 may be formed by electrically insulated metal tracks 20 screen printed or electro-deposited on the first face 13 of the support 5, e.g. embedded in/covered by an electrical insulating layer 21. Preferably, the tracks 20 and the insulating layer 21 are protected by a cover 19. In both the embodiments of figures 2 and 5 the cover 19 may be welded to the support 5 or connected thereto in permanent or removable manner by any suitable method, e.g. by means of deformable flaps 22.

With reference to the embodiment shown in figure 6, the braking element is to be a brake pad 3 and the at least one electromagnetic inductor 8 is carried by the brake caliper 12, which is an integral part/element of the braking system 1b itself; the brake caliper 12 carries a pair of brake pads 3 facing each other and facing from opposite sides the brake disk 2 arranged therebetween.

The brake caliper 12 carries on each side of the brake disk 2 at least one electromagnetic inductor 8 and, on at least one side of the brake caliper, at least one (a pair in the example shown) of the actuators 4 for each respective brake pad 3. In this manner, also in this embodiment the electromagnetic inductors 8 are arranged sufficiently close to the brake pads 3 to concatenate in their magnetic field the metal supports 5 of the brake pads 3.

The braking system 1 or 1b may include one control unit 9 for each pairs of brake pads carried by the same brake caliper 12 or one single control unit 9 controlling all the electromagnets 8 paired to all the elements 2 to be braked: in the first case each brake caliper 12 carries on-board a control unit 9 for its braking elements 3. In the second case, the single control unit 9 may be carried on-board the vehicle.

In any case, each single control unit 9 comprises, as only schematically shown in figures 1 and 6, a timer 23, an electronic switch 24 configured to selectively feed power to the at least one electromagnetic inductor 8 by selectively connecting it to the power source 10 after that the timer 23 has run for an established period of time, and a temperature sensor 25, or a connection to a temperature sensor of the vehicle, configured to detect the environment temperature.

The control unit 9 is configured to switch on the electromagnetic inductor 8 when the environment temperature is below a prefixed threshold and to switch off the electromagnetic inductor 8 after that the aforementioned established period of time has expired.

The control unit 9 may be preferably, but not exclusively, configured to set the established period of time in function of the environment temperature measured by sensor 25, e.g. in case of very cold weather the established period of time may be set by the control unit 9 longer than in case of higher environment temperature.

The power source 10 may be preferably a DC power source, preferably a vehicle battery, and in such a case the control unit 9 further includes a MOSFET LC oscillator 26 (known as Royer oscillator), known *per se,* to convert DC electric current delivered by the power source 10 into AC electric current to be fed to the electromagnetic inductor 8.

According to an aspect of the invention, the electromagnetic inductor 8 is configured to operate with a pre-set frequency, comprised between approximately 20kHz and 85 KHz, and is further configured to generate a magnetic induction field to induce within the metal support 5 and/or in any conductive part of the braking element 3 an induced electric current such as to generate therein in a power comprised approximately between 70 and 90 watt in order to heat such component/s at the desired temperature.

The timer 23 may be configured to set the aforementioned established period of time set lower than, or approximately equal to, 60 seconds.

It is evident from what described above that the present invention also extends to a brake pad 3 for equipping a braking system 1 or 1b of a vehicle, comprising a metal support 5, a block of friction material 6 carried by the support 5 and a damping layer 7 or underlayer, carried by the support 5 interposed between the support 5 and the friction material block 6.

The brake pad 3 according to the invention also comprises, in combination: at least one electromagnetic inductor 8 carried by the support 5 on a first face 13 thereof, which is opposite to the second face 14 carrying the damping layer 7 and the friction block 6 arranged above the damping layer 7; either one power source 10 in AC or DC or an element (e.g. a connector) 27 (only schematically shown in figures 1, 2 and 5 in a generic, non-limitative position for pictorial purposes only) configured to feed to the inductor 8 the current generated by an AC or DC power source 10 of the vehicle; in the case of a DC power source, a DC/AC converter 26 carried onboard the support 5; and a control unit 9 to switch off the power to the at least one electromagnetic inductor 8 after the expiration of a pre-set period of time.

Preferably, the support 5 carries a pair of conductive coils 15 arranged side by side in order to cover the majority of the surface extension of the first face 13 of the support 5 and electrically connected to each other either in full series, such as to establish onto the support two adjacent magnetic flux which are concordant, or in anti-series, such as to establish onto the support two adjacent magnetic flux which are discordant.

It is finally evident that the present invention also relates to a method for eliminating or at least reducing the tendency of a braking element 3, in particular a brake pad, to squeal during cold braking maneuvers of a vehicle equipped with such braking element 3, wherein the braking element 3 comprises a metal support 5, a friction block 6 carried by the metal support 5 and a damping layer 7 or "underlayer", interposed between the support 5 and the friction block 6.

The method of the invention comprises the step of selectively producing a forced increase in a temperature of the damping layer 7, which increase is independent of a natural temperature increase of the damping layer 7 that occurs in use due to the energy dispersed by friction during the braking maneuver.

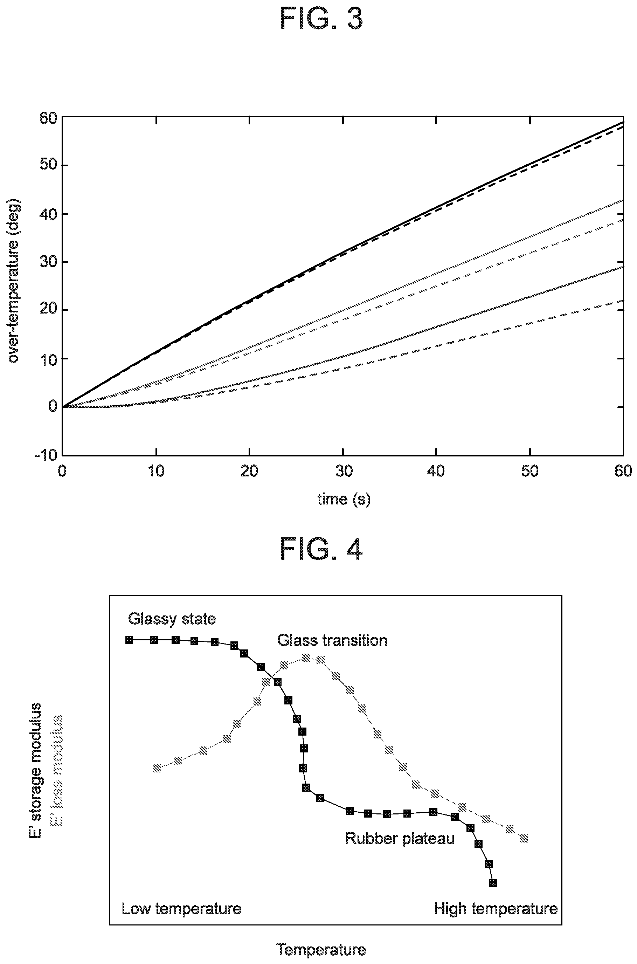

The increase in temperature is set such as to maintain the whole damping layer 7 constantly above a glass transition temperature of rubber components thereof, as shown in the graph of figure 4, so as to ensure that the damping layer 7 always works at conditions assuring maximum damping behavior of the same; in other words, the induced temperature increase is such as to keep the underlayer 7 in a temperature interval corresponding to the "rubber plateau" shown in figure 4.

According to a preferred embodiment of the invention, the damping layer or underlayer 7 is heated by providing, directly within conductive and/or ferromagnetic parts of the braking element 3 a magnetic induction heating generated by an electromagnetic field concatenated with either the whole braking elements 3 or with ferromagnetic parts thereof, e.g. the metal support or backplate 5.

The electromagnetic field is generated by at least one electromagnetic inductor 8 arranged onto/carried by the support 5, or arranged in its vicinity, like as onto the brake caliper 12.

The electromagnetic field is generated by powering in AC a pair of electric insulated electrically conducting coils 15 arranged to constitute an electromagnetic inductor 8 and fed with an AC electric current generated by an electric power source 10 present on the vehicle, e.g. by means of a DC power source connected in series with a DC/AC converter, preferably a MOSFET oscillator.

The electromagnetic field is generate by operating the electromagnetic inductor 8 with a pre-set frequency, comprised between approximately 20kHz and 85 KHz and so as to generate a magnetic induction field to induce within the metal support 5 and/or in any other conductive part of the braking element 3 an induced electric current such as to generate therein a power comprised approximately between 70 and 90 watt, with e.g. a volumic power density of about 0.18 watt/mm³.

The magnetic induction heating of the underlayer 7 is carried out for an established period of time set by a timer 23 and lower than, or approximately equal to, 60 seconds, starting from the switching on of the electromagnetic inductor 8.

Still according to the method of the invention, the electromagnetic induction heating is triggered when the environment temperature sensed by a temperature sensor 25, goes below a prefixed value and/or the vehicle performs a cold start, e.g. after a whole night parking.

Experimental tests have been carried out by using a commercial brake pad equipped handcrafted with an electromagnetic inductor 8 obtained by coiling an electric wire 16 to obtain two coils 15 covering the majority of the surface extension of face 13 (herein for "majority" of a surface it is intended more than 60% of the surface).

Two identical brake pads are tested, but carrying friction blocks 6 made of different friction material mixtures; the coils 15 on the two brake pads are fed with a same power of 80 watt and the temperature of the underlayer is monitored in different points by means of a temperature sensor.

The results are given in the graphics of figure 3, wherein the curve over-temperature (with respect to the environment temperature) upon time is reported for the minimum local temperature detected, the maximum local temperature detected and the average temperature detected and for both the different friction mixtures (for one mixture in continuous line, for the other friction mixture in dotted line).

As it can be seen in figure 3, after about 60 seconds, the desired over-temperatures of 40°C are reached on average in both brake pads with different friction mixtures, although not homogeneously along the thickness of the underlayer 7

All the aims of the present disclosure are therefore fulfilled.

### Certain Terminology

Although certain braking devices, systems, and methods have been disclosed in the context of certain example embodiments, it will be understood by those skilled in the art that the scope of the claims extends beyond the specifically disclosed embodiments to other alternative embodiments and/or uses of the embodiments and certain modifications and equivalents thereof, like brake shows for braking systems based on brake drums. Use with any structure is expressly within the scope of this invention. Various features and aspects of the disclosed embodiments can be combined with or substituted for one another in order to form varying modes of the assembly.

Conditional language, such as "can," "could," "might," or "may," unless specifically stated otherwise, or otherwise understood within the context as used, is generally intended to convey that certain embodiments include or do not include, certain features, elements, and/or steps. Thus, such conditional language is not generally intended to imply that features, elements, and/or steps are in any way required for one or more embodiments.

Unless stated otherwise, the terms "approximately," "about," and "substantially" as used herein represent an amount close to the stated amount that still performs a desired function or achieves a desired result. For example, in some embodiments, as the context may dictate, the terms "approximately", "about", and "substantially" may refer to an amount that is within less than or equal to 10% of the stated amount. Likewise, the term "generally" as used herein represents a value, amount, or characteristic that predominantly includes or tends toward a particular value, amount, or characteristic.

## Claims

1. A braking system (1;1b) for vehicles comprising an element to be braked (2) configured to be in use angularly connected to a wheel hub of a vehicle and at least a braking element (3) configured to cooperate in use by friction with the element to be braked under the action of an actuator (4); the braking element comprising a metal support (5), a block (6) of friction material carried by the support and a damping layer (7) or "underlayer", carried by the support (5) interposed between the support and the friction material block (6); **characterized in that** the braking system further comprises, in combination:
i. An electric device (8) configured to warm up the damping layer (7);
ii. A control unit (9) to switch on and off the electric device; and
iii. A power source (10) for the electric device and the control unit; wherein
iv. The electric device includes at least one electromagnetic inductor (8) and the control unit (9) includes a timer (23), an electronic switch (24) configured to selectively feed power to the at least one electromagnetic inductor (8) by selectively connecting it to said power source (10) after that the timer has run for an established period of time; and a temperature sensor (25), or a connection to a temperature sensor (25) of the vehicle, configured to detect the environment temperature; said control unit (9) being configured to switch on the electromagnetic inductor (8) when the environment temperature is below a prefixed threshold and to switch off the electromagnetic inductor after said established period of time has expired;.

2. The braking system of claim 1, **characterized in that** the electromagnetic inductor (8) is configured to generate a magnetic field when powered by the power source (10) in response to the control unit (9), the at least one electromagnetic inductor (9) being arranged sufficiently close to the braking element (3) to concatenate in its magnetic field the metal support (5) and/or any electroconductive component of the braking element (3).

3. The braking system of claim 1 or 2, **characterized in that** the at least one electromagnetic inductor (8) is carried by the support (5) on a first face (13) thereof, which is opposite to a second face (14) of the support carrying the friction block (6).

4. The braking system of claim 3, **characterized in that** the electromagnetic inductor (8) comprises a pair of electric conductive and insulated coils (15) which are electrically connected in series to each other and to the power source (10); the electric connection between the pair of conductive coils (15) being selected in the group consisting in: full series, in order to establish two adjacent magnetic fluxes which are concordant; anti-series, in order to establish two adjacent magnetic fluxes which are discordant.

5. The braking system of claim 4, **characterized in that** said pair of electric coils (15) are formed: either by an insulated electric wire (16) housed in a shallow recess (18) of said first face (13) of the support, which shallow recess is closed by a cover (19); or by electrically insulated metal tracks (20) screen printed on said first face (13) of the support.

6. The braking system of claim 1 or 2, **characterized in that** said at least one braking element consist of a brake pad (3); and **in that** the at least one electromagnetic inductor (8) is carried by a brake caliper (12) forming part of the braking system (1b) itself and carrying a pair of brake pads (3) facing each other and facing from opposite sides to a brake disk (2) arranged therebetween; the said brake caliper (12) carrying on each side of the brake disk at least one electromagnetic inductor (8) and at least on one side thereof at least one said actuator (4) for a respective brake pad.

7. The braking system according to anyone of the preceding claims, **characterized in that** said control unit (9) is configured to set said established period of time in function of the environment temperature.

8. The braking system of claim 7, **characterized in that** the power source (10) is a DC power source, preferably a vehicle battery, and **in that** the control unit further includes a MOSFET LC oscillator (Royer oscillator) (26) to convert DC electric current delivered by the power source (10) into AC electric current to be fed to the electromagnetic inductor (8); said electromagnetic inductor (8) being configured to operate with a pre-set frequency, comprised between approximately 20kHz and 85 KHz, and is further configured to generate a magnetic induction field to induce within said metal support (5) and/or in any conductive part of the braking element (3) an induced electric current such as to generate therein a power comprised approximately between 70 and 90 watt in order to heat such component/s at a desired temperature; said established period of time set in the timer being lower than, or approximately equal to, 60 seconds.

9. A brake pad (3) for equipping a braking system (1;1b) of a vehicle, comprising a metal support (5), a block of friction material (6) carried by the support and a damping layer (7) or "underlayer", carried by the support (5) interposed between the support and the friction material block; **characterized in** comprising further: at least one electromagnetic inductor (8) carried by the support (5) on a first face (13) thereof, which is opposite to a second face (14) of the support carrying the the friction block (6), said electromagnetic inductor (8) being configured to heat the damping layer (7); either one power source in AC or DC or a element (27) to feed the inductor (8) from an AC or DC power source (10) of the vehicle; in the case of a DC power source, a DC/AC converter (26) carried onboard the support (5); and a control unit (9) connected to or connectable to a temperature sensor (25), or to a connection to a temperature sensor (25) of the vehicle, configured to detect the ambient temperature; the control unit (9) being configured to switch off the power to the at least one electromagnetic inductor (8) after the expiration of a pre-set period of time.

10. The brake pad of claim 9, **characterized in that** the support (5) carries a pair of conductive coils (15) arranged side by side in order to cover the majority of the surface extension of said first face (13) of the support and electrically connected to each other either in full series, such as to establish onto the support two adjacent magnetic flux which are concordant, or in anti-series, such as to establish onto the support two adjacent magnetic flux which are discordant.

11. A method for eliminating or at least reducing the tendency of a braking element (3), in particular a brake pad, to squeal during cold braking maneuvers of a vehicle equipped with said braking element, wherein the braking element comprises a metal support (5), a friction block (6) carried by the metal support and a damping layer (7) or "underlayer", interposed between the support and the friction block; said method comprising the step of selectively producing a forced increase in a temperature of the damping layer (7), which increase is independent of a natural temperature increase of the damping layer (7) that occurs in use due to the energy dispersed by friction during the braking maneuver; said increase in temperature being set such as to maintain the whole damping layer (7) constantly above a glass transition temperature of rubber components of the damping layer (7), so as to ensure that the damping layer (7) always works at conditions assuring maximum damping behavior of the same.

12. The method of claim 11, **characterized in that** the damping layer (7) is heated by providing, directly within conductive and/or ferromagnetic parts of the braking element (3), a magnetic induction heating generated by an electromagnetic field concatenated with either the whole braking elements or with ferromagnetic parts thereof; the electromagnetic field being generated by at least one electromagnetic inductor (8) arranged onto/carried by the support, or arranged in its vicinity; the electromagnetic inductor consisting of a pair of electric insulated electrically conducting coils (15) fed with an AC electric current generated by an electric power source (10) present on the vehicle.

13. The method of claim 12, **characterized in that** said electromagnetic inductor (8) is operated with a pre-set frequency, comprised between approximately 20kHz and 85 KHz; said magnetic induction heating being carried out by generating a magnetic induction field to induce within the metal support (5) and/or in any conductive part of the braking element (3) an induced electric current such as to generate therein a power comprised approximately between 70 and 90 watt in order to heat said damping layer (7) at a desired temperature.

14. The method of claim 12 or 13, **characterized in that** said magnetic induction heating is carried out for an established period of time set by a timer and lower than, or approximately equal to, 60 seconds, starting from the switching on of the electromagnetic inductor (8).

15. The method of anyone of claim 12 to 14, **characterized in that** said magnetic induction heating is triggered when the environment temperature sensed by a temperature sensor (25), goes below a prefixed value and/or the vehicle performs a cold start.

## Patentansprüche

1. Bremssystem (1; 1b) für Fahrzeuge, aufweisend ein zu bremsendes Element (2), das konfiguriert ist, um im Gebrauch winklig mit einer Radnabe eines Fahrzeugs verbunden zu sein, und mindestens ein Bremselement (3), das konfiguriert ist, um im Gebrauch durch Reibung mit dem zu bremsenden Element unter der Einwirkung eines Aktuators (4) zusammenzuwirken; wobei das Bremselement einen Metallträger (5), einen durch den Träger getragenen Block (6) aus Reibmaterial und eine durch den Träger (5) getragene Dämpfungsschicht (7) oder "Unterschicht" aufweist, die zwischen dem Träger und dem Reibmaterialblock (6) angeordnet ist; **dadurch gekennzeichnet, dass** das Bremssystem ferner in Kombination aufweist:
i. eine elektrische Vorrichtung (8), die konfiguriert ist, um die Dämpfungsschicht (7) zu erwärmen;
ii. eine Steuereinheit (9) zum Ein- und Ausschalten der elektrischen Vorrichtung;
und
iii. eine Energiequelle (10) für die elektrische Vorrichtung und die Steuereinheit;
wobei
iv. die elektrische Vorrichtung über mindestens einen elektromagnetischen Induktor (8) verfügt und die Steuereinheit (9) einen Zeitgeber (23), einen elektronischen Schalter (24), der konfiguriert ist, um dem mindestens einen elektromagnetischen Induktor (8) selektiv Energie zuzuführen, indem er ihn selektiv mit der Energiequelle (10) verbindet, nachdem der Zeitgeber für einen festgelegten Zeitraum gelaufen ist; und einen Temperatursensor (25) oder eine Verbindung zu einem Temperatursensor (25) des Fahrzeugs einschließt, der konfiguriert ist, um die Umgebungstemperatur zu erfassen; wobei die Steuereinheit (9) konfiguriert ist, um den elektromagnetischen Induktor (8) einzuschalten, wenn die Umgebungstemperatur unter einem vorgegebenen Schwellenwert liegt, und um den elektromagnetischen Induktor auszuschalten, nachdem der festgelegte Zeitraum abgelaufen ist.

2. Bremssystem nach Anspruch 1, **dadurch gekennzeichnet, dass** der elektromagnetische Induktor (8) konfiguriert ist, um ein Magnetfeld zu erzeugen, wenn er durch die Energiequelle (10) in Reaktion auf die Steuereinheit (9) gespeist wird, wobei der mindestens eine elektromagnetische Induktor (8) ausreichend nahe am Bremselement (3) angeordnet ist, um in seinem Magnetfeld den Metallträger (5) und/oderr jede elektrisch leitfähige Komponente des Bremselements (3) zu verketten.

3. Bremssystem nach Anspruch 1 oder 2, **dadurch gekennzeichnet, dass** der mindestens eine elektromagnetische Induktor (8) durch den Träger (5) auf einer ersten Fläche (13) davon getragen wird, welche einer zweiten Fläche (14) des Trägers, die den Reibblock (6) trägt, gegenüberliegt.

4. Bremssystem nach Anspruch 4, **dadurch gekennzeichnet, dass** das Paar elektrischer Spulen (15) gebildet wird: entweder durch einen isolierten elektrischen Draht (16), der in einer flachen Ausnehmung (18) der ersten Fläche (13) des Trägers untergebracht ist, wobei die flache Ausnehmung durch eine Abdeckung (19) verschlossen ist; oder durch elektrisch isolierte Metallleiterbahnen (20), die im Siebdruckverfahren auf die erste Fläche (13) des Trägers aufgebracht sind.

5. Bremssystem nach Anspruch 4, **dadurch gekennzeichnet, dass** das Paar elektrischer Spulen (15) gebildet wird: entweder durch einen isolierten elektrischen Draht (16), der in einer flachen Ausnehmung (18) der ersten Fläche (13) des Trägers untergebracht ist, wobei die flache Ausnehmung durch eine Abdeckung (19) verschlossen ist; oder durch elektrisch isolierte Metallleiterbahnen (20), die im Siebdruckverfahren auf die erste Fläche (13) des Trägers aufgebracht sind.

6. Bremssystem nach Anspruch 1 oder 2, **dadurch gekennzeichnet, dass** das mindestens eine Bremselement aus einem Bremsbelag (3) besteht; und dass der mindestens eine elektromagnetische Induktor (8) durch einen Bremssattel (12) getragen wird, der einen Teil des Bremssystems (1b) selbst bildet und ein Paar Bremsbeläge (3) trägt, die einander zugewandt sind und von gegenüberliegenden Seiten einer dazwischen angeordneten Bremsscheibe (2) zugewandt sind; wobei der Bremssattel (12) auf jeder Seite der Bremsscheibe mindestens einen elektromagnetischen Induktor (8) und auf mindestens einer Seite davon mindestens einen Aktuator (4) für einen jeweiligen Bremsbelag trägt.

7. Bremssystem nach einem der vorhergehenden Ansprüche, **dadurch gekennzeichnet, dass** die Steuereinheit (9) konfiguriert ist, um den festgelegten Zeitraum in Abhängigkeit von der Umgebungstemperatur einzustellen.

8. Bremssystem nach Anspruch 7, **dadurch gekennzeichnet, dass** die Energiequelle (10) eine Gleichstromquelle ist, vorzugsweise eine Fahrzeugbatterie, und dass die Steuereinheit ferner einen MOSFET-LC-Oszillator (Royer-Oszillator) (26) einschließt, um von der Energiequelle (10) gelieferten elektrischen Gleichstrom in elektrischen Wechselstrom umzuwandeln, der dem elektromagnetischen Induktor (8) zuzuführen ist; wobei der elektromagnetische Induktor (8) konfiguriert ist, um mit einer voreingestellten Frequenz zwischen etwa 20 kHz und 85 kHz zu arbeiten, und ferner konfiguriert ist, um ein magnetisches Induktionsfeld zu erzeugen, um innerhalb des Metallträgers (5) und/oder in jedem leitfähigen Teil des Bremselements (3) einen induzierten elektrischen Strom zu induzieren, um darin eine Leistung zwischen etwa 70 und 90 Watt zu erzeugen, um eine solche Komponente/solche Komponenten auf eine gewünschte Temperatur zu erwärmen; wobei der im Zeitgeber eingestellte festgelegte Zeitraum kürzer als oder etwa gleich 60 Sekunden ist.

9. Bremsbelag (3) zur Ausrüstung eines Bremssystems (1; 1b) eines Fahrzeugs, aufweisend einen Metallträger (5), einen durch den Träger getragenen Block aus Reibmaterial (6) und eine durch den Träger (5) getragene Dämpfungsschicht (7) oder "Unterschicht", die zwischen dem Träger und dem Reibmaterialblock angeordnet ist; **dadurch gekennzeichnet, dass** er ferner aufweist: mindestens einen elektromagnetischen Induktor (8), der durch den Träger (5) auf einer ersten Fläche (13) davon getragen wird, welche einer zweiten Fläche (14) des Trägers, die den Reibblock (6) trägt, gegenüberliegt, wobei der elektromagnetische Induktor (8) konfiguriert ist, um die Dämpfungsschicht (7) zu erwärmen; entweder eine Energiequelle in Wechselstrom oder Gleichstrom oder ein Element (27), um den Induktor (8) von einer Wechselstrom- oder Gleichstromquelle (10) des Fahrzeugs zu speisen; im Falle einer Gleichstromquelle einen DC/AC-Wandler (26), der an Bord des Trägers (5) getragen wird; und eine Steuereinheit (9), die mit einem Temperatursensor (25) oder mit einer Verbindung zu einem Temperatursensor (25) des Fahrzeugs verbunden oder verbindbar ist, der konfiguriert ist, um die Umgebungstemperatur zu erfassen; wobei die Steuereinheit (9) konfiguriert ist, um die Energiezufuhr zu dem mindestens einen elektromagnetischen Induktor (8) nach Ablauf eines voreingestellten Zeitraums auszuschalten.

10. Bremsbelag nach Anspruch 9, **dadurch gekennzeichnet, dass** der Träger (5) ein Paar leitfähiger Spulen (15) trägt, die nebeneinander angeordnet sind, um den Großteil der Oberflächenausdehnung der ersten Fläche (13) des Trägers abzudecken, und die elektrisch miteinander verbunden sind, entweder in Vollreihe, um auf dem Träger zwei benachbarte Magnetflüsse aufzubauen, die gleichgerichtet sind, oder in Antireihe, um auf dem Träger zwei benachbarte Magnetflüsse aufzubauen, die entgegengerichtet sind.

11. Verfahren zum Eliminieren oder zumindest Verringern der Neigung eines Bremselements (3), insbesondere eines Bremsbelags, während Kaltbremsmanövern eines mit dem Bremselement ausgestatteten Fahrzeugs zu quietschen, wobei das Bremselement einen Metallträger (5), einen durch den Metallträger getragenen Reibblock (6) und eine zwischen dem Träger und dem Reibblock angeordnete Dämpfungsschicht (7) oder "Unterschicht" aufweist; wobei das Verfahren den Schritt des selektiven Erzeugens einer erzwungenen Erhöhung einer Temperatur der Dämpfungsschicht (7) aufweist, welche Erhöhung unabhängig von einer natürlichen Temperaturerhöhung der Dämpfungsschicht (7) ist, die im Gebrauch aufgrund der durch Reibung während des Bremsmanövers dispergierten Energie auftritt; wobei die Temperaturerhöhung so eingestellt wird, dass die gesamte Dämpfungsschicht (7) konstant über einer Glasübergangstemperatur von Gummikomponenten der Dämpfungsschicht (7) gehalten wird, um sicherzustellen, dass die Dämpfungsschicht (7) immer unter Bedingungen arbeitet, die ein maximales Dämpfungsverhalten derselben gewährleisten.

12. Verfahren nach Anspruch 11, **dadurch gekennzeichnet, dass** die Dämpfungsschicht (7) erwärmt wird, indem direkt innerhalb leitfähiger und/oder ferromagnetischer Teile des Bremselements (3) eine magnetische Induktionserwärmung bereitgestellt wird, die durch ein elektromagnetisches Feld erzeugt wird, das entweder mit den gesamten Bremselementen oder mit ferromagnetischen Teilen davon verkettet ist; wobei das elektromagnetische Feld durch mindestens einen elektromagnetischen Induktor (8) erzeugt wird, der auf dem Träger angeordnet ist/von diesem getragen wird oder in seiner Nähe angeordnet ist; wobei der elektromagnetische Induktor aus einem Paar elektrisch isolierter, elektrisch leitender Spulen (15) besteht, die mit einem elektrischen Wechselstrom gespeist werden, der durch eine am Fahrzeug vorhandene elektrische Energiequelle (10) erzeugt wird.

13. Verfahren nach Anspruch 12, **dadurch gekennzeichnet, dass** der elektromagnetische Induktor (8) mit einer voreingestellten Frequenz zwischen etwa 20 kHz und 85 kHz betrieben wird; wobei die magnetische Induktionserwärmung durchgeführt wird, indem ein magnetisches Induktionsfeld erzeugt wird, um innerhalb des Metallträgers (5) und/oder in jedem leitfähigen Teil des Bremselements (3) einen induzierten elektrischen Strom zu induzieren, um darin eine Leistung zwischen etwa 70 und 90 Watt zu erzeugen, um die Dämpfungsschicht (7) auf eine gewünschte Temperatur zu erwärmen.

14. Verfahren nach Anspruch 12 oder 13, **dadurch gekennzeichnet, dass** die magnetische Induktionserwärmung für einen festgelegten Zeitraum durchgeführt wird, der durch einen Zeitgeber eingestellt wird und kürzer als oder etwa gleich 60 Sekunden ist, beginnend mit dem Einschalten des elektromagnetischen Induktors (8).

15. Verfahren nach einem der Ansprüche 12 bis 14, **dadurch gekennzeichnet, dass** die magnetische Induktionserwärmung ausgelöst wird, wenn die durch einen Temperatursensor (25) erfasste Umgebungstemperatur unter einen vorgegebenen Wert fällt und/oder das Fahrzeug einen Kaltstart durchführt.

## Revendications

1. Système de freinage (1;1b) pour véhicules comprenant un élément à freiner (2) configuré pour être en service relié angulairement à un moyeu de roue d'un véhicule et au moins un élément de freinage (3) configuré pour coopérer en service par frottement avec l'élément à freiner sous l'action d'un actionneur (4) ; l'élément de freinage comprenant un support métallique (5), un bloc (6) de matériau de frottement porté par le support et une couche d'amortissement (7) ou "sous-couche", portée par le support (5) interposée entre le support et le bloc (6) de matériau de frottement ; **caractérisé en ce que** le système de freinage comprend en outre, en combinaison :
i. Un dispositif électrique (8) configuré pour réchauffer la couche d'amortissement (7) ;
ii. Une unité de commande (9) pour allumer et éteindre le dispositif électrique ; et
iii. Une source d'énergie (10) pour le dispositif électrique et l'unité de commande ;
dans lequel
iv. - Le dispositif électrique comprend au moins un inducteur électromagnétique (8) et l'unité de commande comprend une minuterie (23), un commutateur électronique (24) configuré pour alimenter sélectivement ledit au moins un inducteur électromagnétique (8) en le connectant sélectivement à ladite source d'énergie (10) après que la minuterie a fonctionné pendant une période de temps établie ; et un capteur de température (25), ou une connexion à un capteur de température (25) du véhicule, configuré pour détecter la température de l'environnement ; ladite unité de commande (9) est configurée pour mettre en marche l'inducteur électromagnétique (8) lorsque la température de l'environnement est inférieure à un seuil préfixé et pour éteindre l'inducteur électromagnétique à l'expiration de ladite période de temps établie.

2. Système de freinage de la revendication 1, **caractérisé en ce que** l'inducteur électromagnétique (8) est configuré pour générer un champ magnétique lorsqu'il est alimenté par la source d'énergie (10) en réponse à l'unité de commande (9), ledit au moins un inducteur électromagnétique (9) étant disposé suffisamment près de l'élément de freinage (3) pour concaténer dans son champ magnétique le support métallique (5) et/ou tout composant électro-conducteur de l'élément de freinage (3).

3. Système de freinage de la revendication 1 ou 2, **caractérisé en ce que** ledit au moins un inducteur électromagnétique (8) est porté par le support (5) sur une première face (13) de celui-ci, opposée à une seconde face (14) du support portant le bloc (6) de frottement.

4. Système de freinage de la revendication 3, **caractérisé en ce que** l'inducteur électromagnétique (8) comprend une paire de bobines (15) électro-conductrices et isolées qui sont électriquement connectées en série l'une à l'autre et à la source d'énergie (10) ; la connexion électrique entre la paire de bobines (15) conductrices est choisie dans le groupe consistant en : série, afin d'établir deux flux magnétiques adjacents de même sens ; anti-série, afin d'établir deux flux magnétiques adjacents de sens opposés.

5. Système de freinage de la revendication 4, **caractérisé en ce que** ladite paire de bobines (15) électriques est formée : soit par un fil électrique isolé (16) logé dans une cavité peu profonde (18) de ladite première face (13) du support, cavité peu profonde fermée par un couvercle (19) ; soit par des pistes métalliques isolées électriquement (20) sérigraphiées sur ladite première face (13) du support.

6. Système de freinage de la revendication 1 ou 2, **caractérisé en ce que** ledit au moins un élément de freinage consiste en une plaquette de frein (3) ; et **en ce que** ledit au moins un inducteur électromagnétique (8) est porté par un étrier de frein (12) faisant partie du système de freinage (1b) lui-même et portant une paire de plaquettes de frein (3) se faisant face et faisant face, depuis des côtés opposés, à un disque de frein (2) disposé entre eux ; ledit étrier de frein (12) portant de chaque côté du disque de frein au moins un inducteur électromagnétique (8) et au moins d'un côté de celui-ci au moins un actionneur (4) pour une plaquette de frein respective.

7. Système de freinage selon l'une quelconque des revendications précédentes, **caractérisé en ce que** ladite unité de commande (9) est configurée pour régler ladite période de temps établie en fonction de la température d'environnement.

8. Système de freinage de la revendication 7, **caractérisé en ce que** la source d'énergie (10) est une source d'énergie continue, de préférence une batterie de véhicule, et **en ce que** l'unité de commande comprend en outre un oscillateur MOSFET LC (oscillateur Royer) (26) pour convertir le courant électrique continu fourni par la source d'énergie (10) en courant électrique alternatif destiné à alimenter l'inducteur électromagnétique (8) ; ledit inducteur électromagnétique (8) est configuré pour fonctionner à une fréquence prédéfinie, comprise entre environ 20 kHz et 85 kHz, et est en outre configuré pour générer un champ d'induction magnétique afin d'induire dans ledit support métallique (5) et/ou dans toute partie conductrice de l'élément de freinage (3) un courant électrique induit de manière à y générer une puissance comprise approximativement entre 70 et 90 watts afin de chauffer ce(s) composant(s) à une température souhaitée ; ladite période de temps établie dans la minuterie étant inférieure ou approximativement égale à 60 secondes.

9. Plaquette de frein (3) destinée à équiper un système de freinage (1;1b) d'un véhicule, comprenant un support métallique (5), un bloc (6) de matériau de frottement porté par le support et une couche d'amortissement (7) ou "sous-couche", portée par le support (5) interposée entre le support et le bloc de matériau de frottement ; **caractérisée en ce qu'**elle comprend en outre : au moins un inducteur électromagnétique (8) porté par le support (5) sur une première face (13) de celui-ci, opposée à une seconde face (14) du support portant le bloc (6) de frottement, ledit inducteur électromagnétique (8) étant configuré pour chauffer la couche d'amortissement (7) ; soit une source d'énergie en courant alternatif ou continu ou un élément (27) pour alimenter l'inducteur (8) à partir d'une source d'énergie en courant alternatif ou continu (10) du véhicule ; dans le cas d'une source d'énergie en courant continu, un convertisseur courant continu/courant alternatif (26) embarqué sur le support (5) ; et une unité de commande (9) connectée ou pouvant être connectée à un capteur de température (25), ou à une connexion à un capteur de température (25) du véhicule, configurée pour détecter la température ambiante ; l'unité de commande (9) étant configurée pour couper l'alimentation dudit au moins un inducteur électromagnétique (8) après l'expiration d'une période de temps prédéfinie.

10. Plaquette de frein de la revendication 9, **caractérisée en ce que** le support (5) porte une paire de bobines (15) conductrices disposées côte à côte de façon à couvrir la majorité de l'extension de surface de ladite première face (13) du support et connectées électriquement l'une à l'autre soit en série, de façon à établir sur le support deux flux magnétiques de même sens, soit en anti-série, de façon à établir sur le support deux flux magnétiques adjacents de sens opposés.

11. Procédé pour éliminer ou au moins réduire la tendance d'un élément de freinage (3), en particulier une plaquette de frein, à crisser pendant les manœuvres de freinage à froid d'un véhicule équipé dudit élément de freinage, dans lequel l'élément de freinage comprend un support métallique (5), un bloc (6) de frottement porté par le support métallique et une couche d'amortissement (7) ou "sous-couche", interposée entre le support et le bloc de frottement ; ledit procédé comprend l'étape consistant à produire sélectivement une augmentation forcée d'une température de la couche d'amortissement (7), cette augmentation étant indépendante de l'augmentation naturelle d'une température de la couche d'amortissement (7) qui se produit en cours d'utilisation en raison de l'énergie dispersée par le frottement pendant la manoeuvre de freinage ; ladite augmentation de la température est réglée de manière à maintenir l'ensemble de la couche d'amortissement (7) constamment au-dessus d'une température de transition vitreuse de composants de caoutchouc de la couche d'amortissement (7), de manière à garantir que la couche d'amortissement (7) fonctionne toujours dans des conditions assurant un comportement d'amortissement maximal de celle-ci.

12. Procédé de la revendication 11, **caractérisé en ce que** la couche d'amortissement (7) est chauffée en fournissant, directement à l'intérieur des parties conductrices et/ou ferromagnétiques de l'élément de freinage (3), un chauffage par induction magnétique généré par un champ électromagnétique concaténé soit avec l'ensemble des éléments de freinage, soit avec des parties ferromagnétiques de ceux-ci ; le champ électromagnétique est généré par au moins un inducteur électromagnétique (8) disposé sur/porté par le support, ou disposé à proximité de celui-ci ; l'inducteur électromagnétique consiste en une paire de bobines (15) électro-conductrices isolées alimentées par un courant électrique alternatif généré par une source d'énergie (10) électrique présente sur le véhicule.

13. Procédé selon la revendication 12, **caractérisé en ce que** ledit inducteur électromagnétique (8) fonctionne à une fréquence prédéfinie, comprise entre environ 20kHz et 85 KHz ; ledit chauffage par induction magnétique étant réalisé en générant un champ d'induction magnétique pour induire dans le support métallique (5) et/ou dans toute partie conductrice de l'élément de freinage (3) un courant électrique induit de manière à y générer une puissance comprise approximativement entre 70 et 90 watt afin de chauffer ladite couche d'amortissement (7) à une température souhaitée.

14. Procédé selon la revendication 12 ou 13, **caractérisé en ce que** le chauffage par induction magnétique est effectué pendant une durée déterminée, fixée par une minuterie et inférieure ou approximativement égale à 60 secondes, à partir de la mise en marche de l'inducteur électromagnétique (8).

15. Procédé de l'une quelconque des revendications 12 à 14, **caractérisé en ce que** le chauffage par induction magnétique est déclenché lorsque la température de l'environnement, mesurée par un capteur de température (25), passe en dessous d'une valeur préfixée et/ou que le véhicule effectue un démarrage à froid.
